# EUROPEAN PATENT APPLICATION

(11) **EP 4 631 808 A1**
(43) Date of publication of application: **15.10.2025**
(21) Application number: 24914471.8
(22) Date of filing: 05.02.2024
(51) Int. Cl.: B60W 10/06, B60W 10/08, B60W 20/00, B60W 40/00

(54) **CONTROL METHOD AND SYSTEM FOR VEHICLE, VEHICLE, AND STORAGE MEDIUM**

(30) Priority: 31.01.2024 CN 202410146885
(71) Applicant: Chongqing Changan Automobile Co., Ltd., Chongqing 400023 (CN)
(72) Inventor: ZHAO, Wei, Chongqing 400023 (CN); FU, Xuehai, Chongqing 400023 (CN); LEI, Xianqi, Chongqing 400023 (CN); CHEN, Xuping, Chongqing 400023 (CN); MI, Bo, Chongqing 400023 (CN)
(74) Representative: Keller Schneider Patent- und Markenanwälte AG
(86) International application number: PCT/CN2024/076158
(87) International publication number: WO 2025/161057

(57) **Abstract**

The present application relates to the technical field of automotive control and discloses a control method and a control system for a vehicle, a vehicle, and a storage medium. The vehicle comprises an engine, and the control method comprises: obtaining a current rotational speed of the engine, and determining a first maximum intake air volume allowed by the engine at the current rotational speed; obtaining a current temperature of a temperature influence factor, and searching for a correction coefficient corresponding to the current temperature, wherein the temperature influence factor represents a factor with changing temperature, and a temperature magnitude of the temperature influence factor is correlated with a magnitude of an intake air volume of the engine; correcting the first maximum intake air volume according to the correction coefficient to obtain a second maximum intake air volume; and calculating, based on the second maximum intake air volume, a maximum air path torque that the engine can provide, and controlling the vehicle according to the maximum air path torque. This enables more accurate control of the vehicle.

## Description

### TECHNICAL FIELD

The present application relates to the technical field of automotive control, and specifically to a control method and a control system for a vehicle, a vehicle, and a storage medium.

### BACKGROUND

In some vehicle control technologies, a driver can send demands to a power control unit (PCU) by operating a pedal or steering wheel. Based on these demands, the PCU performs arbitration and then controls the vehicle's power system (e.g., engine, motor, etc.) to deliver a performance that meets the user's demands. For example, by depressing the pedal, the driver can send an acceleration demand to the PCU. After performing arbitration based on the pedal displacement (i.e., acceleration demand), the PCU can control the engine to provide the torque required by the driver. Typically, when performing arbitration, the PCU exercises control over the power system within its performance limits. For instance, if the engine is capable of generating a maximum torque of 10,000 N·m, the engine can only be controlled within this torque range. Therefore, it is necessary to preset maximum performance thresholds for each power system to serve as references during PCU arbitration.

However, some existing technologies are not sufficiently accurate in presetting maximum performance thresholds for engines, resulting in inaccurate vehicle control.

### SUMMARY OF THE INVENTION

In view of this, the embodiments of the present application provide a control method and a control system for a vehicle, a vehicle, and a computer-readable storage medium, enabling more accurate vehicle control.

In a first aspect, the present application provides a control method for a vehicle, wherein the vehicle comprises an engine; and the control method comprises:
obtaining a current rotational speed of the engine, and determining a first maximum intake air volume allowed by the engine at the current rotational speed;
obtaining a current temperature of a temperature influence factor, and searching for a correction coefficient corresponding to the current temperature, wherein the temperature influence factor represents a factor with changing temperature, and a temperature magnitude of the temperature influence factor is correlated with a magnitude of an intake air volume of the engine;
correcting the first maximum intake air volume according to the correction coefficient to obtain a second maximum intake air volume; and
calculating, based on the second maximum intake air volume, a maximum air path torque that the engine can provide, and controlling the vehicle according to the maximum air path torque.

According to the above technical means, after obtaining the first maximum intake air volume allowed by the engine at the current rotational speed and subsequently correcting the first maximum intake air volume according to the correction coefficient corresponding to the current temperature of the temperature influence factor, the influence of temperature changes in the temperature influence factor on the engine's intake air volume can be overcame, so that the second maximum intake air volume more closely approximates to an actual intake air volume of the engine. Consequently, the maximum air path torque calculated based on the second maximum intake air volume will be more accurate, enabling more accurate vehicle control according to the maximum air path torque.

In some examples, the engine further comprises an intake valve, and there are multiple different control modes for opening and closing the intake valve; and
the step of determining a first maximum intake air volume allowed by the engine at the current rotational speed comprises:
obtaining a current target control mode for the intake valve; and
searching, among multiple maximum air volumes corresponding to the target control mode, for a target maximum air volume allowed by the engine at the current rotational speed, and taking the target maximum air volume as the first maximum intake air volume.

According to the above technical means, the issue of inconsistent opening durations of the intake valve under different control modes can be addressed, leading to a more accurate determination of the first maximum intake air volume.

In some examples, the engine further comprises an intake control system for controlling the opening and closing of the intake valve, and the control modes for the intake valve comprise a first control mode based on the intake control system; and
the step of obtaining a current target control mode for the intake valve comprises:
taking the first control mode as the target control mode when the intake control system is in an operating state; and
taking a second control mode other than the first control mode as the target control mode when the intake control system is not in an operating state.

According to the above technical means, since the intake control system can adjust the opening and closing times of the intake valve based on variations in the engine's rotational speed and load, when the intake control system is in an operating state, prioritizing the first control mode based on the intake control system as the target control mode can enhance the engine's operational efficiency. Conversely, when the intake control system is not in an operating state, taking the second control mode as the target control mode ensures the engine's normal operation and prevents engine malfunctions.

In some examples, the step of calculating, based on the second maximum intake air volume, a maximum air path torque that the engine can provide comprises:
converting the second maximum intake air volume into a maximum combustion torque of the engine;
converting from the maximum combustion torque to obtain an initial maximum flywheel end torque of the engine; and
correcting the initial maximum flywheel end torque based on a current altitude of the vehicle to obtain the maximum air path torque.

According to the above technical means, flywheel end torque variations caused by different air masses at varying altitudes can be avoided, thereby enhancing the accuracy of the maximum air path torque.

In some examples, before the step of searching for a correction coefficient corresponding to the current temperature, following operations are performed separately in different temperature ranges of the temperature influence factor to determine the correction coefficient corresponding to each temperature range:
sending a torque command to the engine to instruct the engine to provide a first air path torque represented by the torque command;
obtaining a second air path torque actually provided by the engine after the engine responds to the torque command;
if the first air path torque is different from the second air path torque, determining an actual intake air volume of the engine when the engine provides the second air path torque; and
determining the correction coefficient based on the actual intake air volume and the first maximum intake air volume allowed by the engine.

According to the above technical means, the determination process for the correction coefficient demonstrates high operational feasibility.

In some examples, the vehicle further comprises a generator connected in series with the engine; and

the step of obtaining a second air path torque actually provided by the engine after the engine responds to the torque command comprises:
obtaining a motor power and a motor rotational speed of the generator, and determining a motor torque provided by the generator based on the motor power and the motor rotational speed; and
converting from the motor torque to obtain the second air path torque.

According to the above technical means, by indirectly obtaining the second air path torque through the detection of motor torque, the detection solution can be streamlined.

In some examples, the step pf sending a torque command to the engine comprises:
sending torque commands to the engine separately in different rotational speed ranges of the engine, wherein the torque commands corresponding to the different rotational speed ranges are not entirely the same.

According to the above technical means, it is possible to adapt to the situation where the engine provides different torques in different rotational speed ranges.

In some examples, the step pf sending a torque command to the engine comprises:
sending torque commands to the engine in separately different load ranges of the engine, wherein the torque commands corresponding to the different load ranges are not entirely the same.

According to the above technical means, it is possible to adapt to the situation where the engine provides different torques in different load ranges.

In a second aspect, the present application provides a control system for a vehicle, wherein the vehicle comprises an engine; and the control system comprises:
an initial air volume calculation module, configured to obtain a current rotational speed of the engine and determine a first maximum intake air volume allowed by the engine at the current rotational speed;
a correction coefficient search module, configured to obtain a current temperature of a temperature influence factor and search for a correction coefficient corresponding to the current temperature, wherein the temperature influence factor represents a factor with changing temperature, and a temperature magnitude of the temperature influence factor is correlated with a magnitude of an intake air volume of the engine;
a correction module, configured to correct the first maximum intake air volume according to the correction coefficient to obtain a second maximum intake air volume; and
a torque calculation module, configured to calculate, based on the second maximum intake air volume, a maximum air path torque that the engine can provide, and control the vehicle according to the maximum air path torque.

In some examples, the engine further comprises an intake valve, and there are multiple different control modes for opening and closing the intake valve; and the initial air volume calculation module is specifically configured to:
obtain a current target control mode for the intake valve; and
search, among multiple maximum air volumes corresponding to the target control mode, for a target maximum air volume allowed by the engine at the current rotational speed, and take the target maximum air volume as the first maximum intake air volume.

In some examples, the vehicle further comprises an intake control system for controlling the opening and closing of the intake valve, and the control modes for the intake valve comprise a first control mode based on the intake control system; and the initial air volume calculation module is specifically configured to:
take the first control mode as the target control mode when the intake control system is in an operating state; and
take a second control mode other than the first control mode as the target control mode when the intake control system is not in an operating state.

In some examples, the torque calculation module is specifically configured to:
convert the second maximum intake air volume into a maximum combustion torque of the engine;
convert from the maximum combustion torque to obtain a maximum flywheel end torque of the engine; and
correct the maximum flywheel end torque based on a current altitude of the vehicle to obtain the maximum air path torque.
In some examples, the control system further comprises a correction coefficient determination module; and
before the step of searching for a correction coefficient corresponding to the current temperature, the correction coefficient determination module is configured to:
   perform following operations separately in different temperature ranges of the temperature influence factor to determine the correction coefficient corresponding to each temperature range:
   sending a torque command to the engine to instruct the engine to provide a first air path torque represented by the torque command;
   obtaining a second air path torque actually provided by the engine after the engine responds to the torque command;
   if the first air path torque is different from the second air path torque, determining an actual intake air volume of the engine when the engine provides the second air path torque; and
   determining the correction coefficient based on the actual intake air volume and the first maximum intake air volume allowed by the engine.

In some examples, the vehicle further comprises a generator connected in series with the engine; and
the correction coefficient determination module is specifically configured to:
obtain a motor power and a motor rotational speed of the generator, and determine a motor torque provided by the generator based on the motor power and the motor rotational speed; and
convert from the motor torque to obtain the second air path torque.

In some examples, the correction coefficient determination module is specifically configured to:
send torque commands to the engine separately in different rotational speed ranges of the engine, wherein the torque commands corresponding to the different rotational speed ranges are not entirely the same.

In some examples, the correction coefficient determination module is specifically configured to:
send torque commands to the engine separately in different load ranges of the engine, wherein the torque commands corresponding to the different load ranges are not entirely the same.

In a third aspect, the present application provides a computer-readable storage medium, wherein the computer-readable storage medium is configured to store a computer program which implements the aforementioned method when executed by a processor.

In a fourth aspect, the present application provides a vehicle, comprising a processor and a memory, wherein the memory is configured to store a computer program which implements the aforementioned method when executed by the processor.

Beneficial effects of the present application:
After obtaining the first maximum intake air volume allowed by the engine at the current rotational speed and subsequently correcting the first maximum intake air volume according to the correction coefficient corresponding to the current temperature of the temperature influence factor, the influence of temperature changes in the temperature influence factor on the engine's intake air volume can be overcame, so that the second maximum intake air volume more closely approximates to the actual intake air volume of the engine. Consequently, the maximum air path torque calculated based on the second maximum intake air volume will be more accurate, enabling more accurate vehicle control according to the maximum air path torque.

### BRIEF DESCRIPTION OF THE DRAWINGS

The features and advantages of the present application will be more clearly understood by referring to the accompanying drawings, which are schematic and should not be construed as limiting the present application in any way. In the accompanying drawings:
FIG.1 shows a structural schematic diagram of a vehicle according to an example of the present application;
FIG.2 shows a structural schematic diagram of an engine according to an example of the present application;
FIG. 3 shows a schematic diagram of control of an engine according to an example of the present application;
FIG.4 shows a schematic flowchart of a control method according to an example of the present application;
FIG.5 shows a flowchart of determining a maximum air path torque according to an example of the present application;
FIG.6 shows a schematic diagram of modules of a control system according to an example of the present application; and
FIG.7 shows a schematic diagram of a vehicle according to an example of the present application.

### DETAILED DESCRIPTION

To make the objectives, technical solutions, and advantages of the embodiments of the present application clearer, the technical solutions of the present application will be described clearly and completely with reference to the accompany drawings. Obviously, the described embodiments are part of the embodiments of the present application, but not all of the embodiments. Based on the embodiments in the present application, all other embodiments obtained by a person of ordinary skill in the art without making creative efforts fall within the protection scope of the present application.

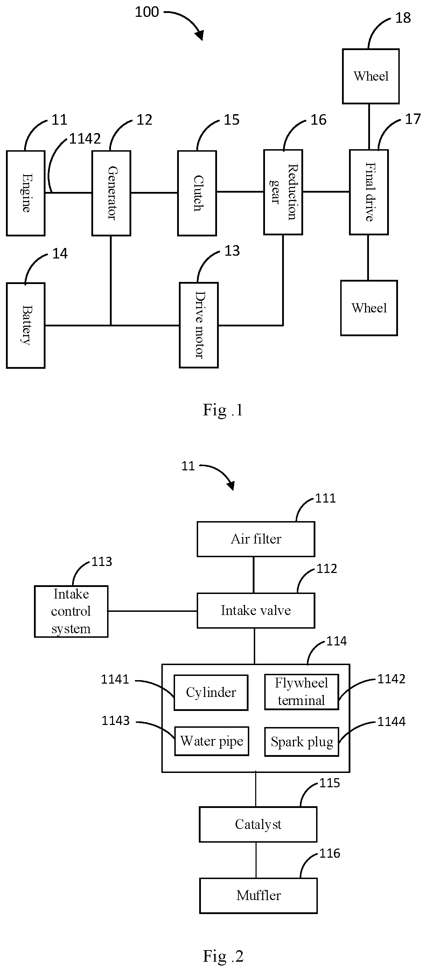

A vehicle according to the present application may specifically refer to a vehicle equipped with a hybrid power system. The hybrid power system refers to a power system that includes an engine and a drive motor. With reference to FIG.1, it shows a structural schematic diagram of a vehicle 100 according to an example of the present application. In FIG.1, the vehicle 100 comprises an engine 11, a generator 12, a drive motor 13, a battery 14, a clutch 15, a reduction gear 16, a final drive 17, and wheels 18, wherein the engine 11 and the generator 12 are connected in series, i.e., a rotational speed of the engine 11 is the same as that of the generator 12; the generator 12 can be connected to the reduction gear 16 through the clutch 15, the reduction gear 16 is connected to the final drive 17, and the final drive 17 is connected to the wheels 18; and the generator 12 is connected to both the battery 14 and the drive motor 13, and the drive motor 13 is connected to the reduction gear 16. Based on the structure shown in FIG.1, the wheels 18 can be driven to rotate in the following modes by controlling the clutch 15:
1) To connect the generator 12 and the reduction gear 16. In this case, on the one hand, the engine 11 can provide torque to drive the wheels 18 to rotate through the generator 12, the clutch 15, the reduction gear 16, and the final drive 17 On the other hand, the battery 14 supplies power to the drive motor 13, and after the drive motor 13 rotates, it can provide torque to drive the wheels 18 to rotate through the reduction gear 16 and the final drive 17. That is, both the engine 11 and the drive motor 13 can simultaneously drive the wheels 18 to rotate.
2) To disconnect the generator 12 from the reduction gear 16. In this case, the drive motor 13 provides torque to drive the wheels 18 to rotate. That is, the wheels 18 are driven solely by the drive motor 13

In both of the aforementioned driving modes for the wheels 18, the engine 11 can drive the generator 12 to generate electricity. The electrical energy generated during this process can be stored in the battery 14 or supplied to the drive motor 13. Specifically, the engine 11 may comprise a flywheel terminal 1142. When the engine 11 rotates, torque at the flywheel terminal 1142 can be referred to as the flywheel end torque of the engine 11, while torque provided by the generator 12 can be referred to as the generator torque. When absolute values of the flywheel end torque and the generator torque are not equal, the generator 12 can be in a power generation state. For instance, if the absolute value of the flywheel end torque is 500 N·m and the absolute value of the generator torque is 400 N·m, the difference of 100 N·m between the flywheel end torque and the generator torque can be considered as the torque used for power generation. Optionally, when the absolute values of the flywheel end torque and the generator torque are equal but their directions are opposite, it can be considered that the generator 12 is not in a power generation state. In this scenario, the generator 12 can be said to be operating in a steady state.

With reference to FIG.2, it shows a structural schematic diagram of an engine 11 according to an example of the present application. In FIG.1, the engine 11 comprises an air filter 111, an intake valve 112, an intake control system 113, an engine main body 114, a catalyst 115, and a muffler 116, which are connected in sequence. The engine main body 114 can further comprise components such as a cylinder 1141, a flywheel terminal 1142, a water pipe 1143, and a spark plug 1144. Specifically, when the engine 11 is in an operating state, air enters through the air filter 111. The air filter 111 can filter out impurities in the air. When the intake valve 112 is opened, the air filtered by the air filter 111 can enter the engine main body 114 from the intake valve 112. The spark plug 1144 ignites a fuel-air mixture in the cylinder 1141, and thermal energy generated from combustion is converted into torque output from the flywheel terminal 1142 (i.e., the flywheel end torque). When the engine 11 is in an operating state, water conveyed through the water pipe 1143 can be used to cool down the engine 11. The catalyst 115 can purify exhaust gases produced during combustion, enabling the vehicle's exhaust emissions to meet regulatory standards and reducing air pollution. The muffler 116 can be used to reduce the noise emitted by the exhaust gases.

Optionally, in FIG.2, the engine 11 further comprises an intake control system 113 for controlling the opening and closing of the intake valve 112. The intake control system 113, also known as Variable Valve Timing (VVT), is primarily used to adjust the time of the opening and closing of the intake valve 112 based on changes in the engine 11's rotational speed and load, thereby improving the engine 11's operational efficiency.

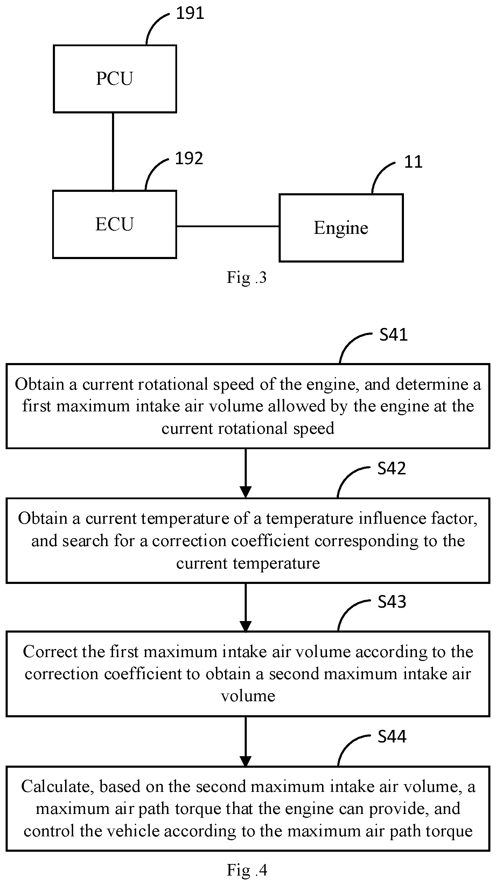

Optionally, in some examples, the vehicle 100 may also comprise a power control unit (PCU) and an electronic control unit (ECU). With reference to FIG. 3, it is a schematic diagram of control of an engine 11 according to an example of the present application. As shown in FIG. 3, by operating devices such as a pedal and steering wheel of the vehicle 100, a driver can send demands (e.g., acceleration demands) to the PCU 191. Based on these demands, the PCU 191 determines control information for the engine 11 within a range of a maximum flywheel end torque that the engine 11 can provide. The control information may include the engine 11's operating mode and rotational speed, and the flywheel end torque to be provided by the engine 11 to meet the demands. After determining the control information, the PCU 191 can send it to the ECU 192 in the form of control commands. In response to the control commands from the PCU 191, the ECU 192 calculates an intake air volume, throttle opening, etc., of the engine 11 required to meet the demands using an engine charging torque model, and then controls the engine 11 to operate so that it outputs the torque required to meet the demands.

In the above solutions, the maximum flywheel end torque that the engine 11 can provide can be preset in the PCU 191. However, the inventors of the present application have discovered that the maximum flywheel end torque is influenced by multiple factors. For instance, changes in ambient temperature or the temperature of the air entering the engine 11 can lead to variations in the maximum flywheel end torque. However, in some existing technologies, the maximum flywheel end torque is treated as a fixed value, which results in the PCU 191 potentially using an inaccurate maximum flywheel end torque when determining the control information for the engine 11. Consequently, the derived control information may also be inaccurate. As a result, the engine 11 cannot be accurately controlled according to the demands, and subsequently, the vehicle 100 cannot be accurately controlled either.

In view of this, the present application provides a control method for a vehicle that can address the aforementioned issues, thereby enabling more accurate control of the vehicle 100. The control method can be applied to an electronic device. The electronic device includes, but is not limited to, laptops, desktop computers, servers, the PCU 191, or the ECU 192 depicted in FIG. 3 above.

With reference to FIG.4, it is a schematic flowchart of a control method according to an example of the present application. In FIG.4, the control method may comprise the following steps:

Step S41: Obtain a current rotational speed of the engine 11 and determine a first maximum intake air volume allowed by the engine 11 at the current rotational speed.

Specifically, the current rotational speed of the engine 11 can be detected by a rotational speed detection device (such as an angle sensor). Alternatively, it can also be obtained from the control information for the engine 11. For instance, when the ECU 192 controls the engine 11 to rotate at a speed of 20 rps, the current rotational speed of the engine 11 can be retrieved from the control command sent by the ECU 192 to the engine 11. It should be noted that the above examples are merely illustrative of some ways to obtain the current rotational speed and do not constitute a limitation on the present application.

The first maximum intake air volume may refer to an air volume required when the engine 11 operates at the current rotational speed in a standard environment and provides the maximum flywheel end torque within its performance limits. The standard environment may refer to an environment where a temperature of a temperature influence factor is the same as a preset temperature. The temperature influence factor represents a factor with changing temperature, and a temperature magnitude of the temperature influence factor is correlated with a magnitude of the intake air volume of the engine 11.

In this example, the temperature influence factors may include the water in the water pipe 1143, the environment where the engine 11 is located, and the air entering the engine 11. In simpler terms, the water temperature in the water pipe 1143, the ambient temperature where the engine 11 is located, and the temperature of the air entering the engine 11 can affect the intake air volume of the engine 11. The water temperature, ambient temperature, and air temperature in the standard environment can be set respectively according to actual conditions. For instance, in the standard environment, the water temperature can be set to 30°C, the ambient temperature to 20°C, and the air temperature to 25°C.

In this example, a correspondence relationship between a rotational speed range and the first maximum intake air volume, similar to that shown in Table 1, can be pre-established through simulation or actual detection.

**Table 1 Correspondence Relationship between the Rotational Speed Range and the First Maximum Intake air volume**

| Rotational Speed Range (Unit: rps) | First Maximum Intake Air Volume (Unit: m³) |
|---|---|
| 0~10 | 2 |
| 10~20 | 3.5 |
| ... | ... |
| 80~90 | 7 |

In this way, upon obtaining the current rotational speed of the engine 11, the first maximum intake air volume allowed by the engine 11 at the current rotational speed can be obtained through retrieval of the correspondence relationship table as shown in Table 1.

In some alternative examples, a first calculation formula or a first model can be pre-established. An input to the first calculation formula or the first model can be the obtained current rotational speed of the engine 11, and an output can be the first maximum intake air volume allowed by the engine 11.

Step S42: Obtain a current temperature of the temperature influence factor, and search for a correction coefficient corresponding to the current temperature.

Here, the correction coefficient is used to correct the first maximum intake air volume obtained in Step S41. It can be seen from the relevant description in Step S41, the temperature magnitude of the temperature influence factor is correlated with the magnitude of the intake air volume of the engine 11, meaning that the temperature changes of the temperature influence factor will affect the intake air volume of the engine 11. Based on this premise, it can be understood that when the current temperature of the temperature influence factor differs from the temperature in the standard environment, taking the first maximum intake air volume obtained in Step S41 as the intake air volume of the engine 11 would be inaccurate. Therefore, it is necessary to correct the first maximum intake air volume.

In this example, similar to Table 1, the temperature of the temperature influence factor can be divided into multiple temperature ranges within its limits. A correspondence relationship between the temperature range and the correction coefficient can be pre-established through simulation or actual detection. For instance, if there is only one temperature influence factor, a correspondence relationship between the temperature range and the correction coefficient, similar to that shown in Table 2, can be pre-established through simulation or actual detection.

**Table 2 Correspondence Relationship between the Temperature Range and the Correction Coefficient**

| Temperature Range (Unit: m³) | Correction Coefficient |
|---|---|
| 0~5 | 0.8 |
| 5~10 | 0.85 |
| ... | ... |
| 70~75 | 0.9 |

In some alternative examples, considering that the same temperature range may have different correction coefficients under different rotational speed ranges of the engine 11, a correspondence relationship among the rotational speed range, the temperature range, and the correction coefficient can be pre-established through simulation or actual detection. For instance, if there is only one temperature influence factor, a correspondence relationship among the rotational speed range, the temperature range, and the correction coefficient, similar to that shown in Table 3, can be pre-established through simulation or actual detection.

**Table 3 Correspondence Relationship among the Rotational Speed Range, the Temperature Range, and the Correction Coefficient**

| Rotational Speed Range (Unit: rps) | Temperature Range (Unit: m³) | Correction Coefficient |
|---|---|---|
| 0~10 | 0~5 | 0.8 |
| | ... | ... |
| | 70~75 | 0.9 |
| ... | ... | ... |
| 80~90 | 0~5 | 0.85 |
| | ... | ... |
| | 70~75 | 0.99 |

Optionally, when multiple temperature environmental influence factors are involved, the temperature ranges for different factors can be defined differently. For example, the ambient temperature ranges can be divided as 0~5°C, 5~10°C, ..., 70~75°C, while the water temperature ranges can be divided as 0~10°C, 10~20°C, ..., 80~90°C. These temperature ranges for different temperature environmental influence factors can be combined. For instance, by combining the temperature ranges of ambient temperature and water temperature, a correspondence relationship among the rotational speed range, the temperature range, and the correction coefficient, similar to that shown in Table 4, can be pre-established.

**Table 4 Correspondence Relationship among the Rotational Speed Range, the Temperature Range, and the Correction Coefficient**

| Rotational Speed Range | Ambient Temperature Range | Water Temperature Range | Correction Coefficient |
|---|---|---|---|
| 0~10 | 0~5 | 0~5 | 0.8 |
| | | ... | ... |
| | | 70~75 | 0.9 |
| | 5~10 | 0~5 | 0.65 |
| | | ... | ... |
| | | 70~75 | 0.85 |

In this way, upon obtaining the current temperatures of the temperature influence factors, the corresponding correction coefficient can be searched for based on the current temperatures.

In some alternative examples, a second calculation formula or a second model can be pre-established. An input to the second calculation formula or the second model can be the current rotational speed of the engine 11 or the current temperature of the temperature influence factor, and an output can be the correction coefficient.

S43: Correct the first maximum intake air volume according to the correction coefficient to obtain a second maximum intake air volume.

In this example, the second maximum intake air volume can be obtained by multiplying the first maximum intake air volume by the correction coefficient.

In some alternative examples, other mathematical operations (such as division) other than multiplication can be performed on the first maximum intake air volume and the correction coefficient to obtain the second maximum intake air volume.

S44: Calculate, based on the second maximum intake air volume, a maximum air path torque that the engine 11 can provide, and control the vehicle 100 according to the maximum air path torque.

Specifically, the maximum air path torque refers to the maximum flywheel end torque that the engine 11 can provide, calculated based on the second maximum intake air volume at the current ignition angle.

In this example, the step of calculating the maximum air path torque that the engine 11 can provide based on the second maximum intake air volume may comprise:
1) Converting the second maximum intake air volume into a maximum combustion torque of the engine 11.
   Specifically, the second maximum intake air volume can be input into a system torque model, which then converts the second maximum intake air volume into the maximum combustion torque of the engine 11.
2) Converting from the maximum combustion torque to obtain an initial maximum flywheel end torque of the engine 11.
   Specifically, an alternative torque can be obtained by deducting a reserve torque of the engine 11 from the maximum combustion torque. Here, the reserve torque is the torque reserved by the engine 11 to handle unexpected situations. For example, it can be used to overcome a sudden increase in resistance during the rotation of the engine 11.
   Optionally, the obtained alternative torque is compared with a maximum combustion protection torque of the engine 11, and the lesser of the two values is selected as the initial flywheel end torque. Here, the maximum combustion protection torque refers to the maximum air path torque that the engine 11 is allowed to provide without incurring damage. It can be understood that when the maximum combustion protection torque is less than the alternative torque, the maximum combustion protection torque needs to be taken as the initial flywheel end torque to prevent damage of the engine 11. Conversely, when the maximum combustion protection torque is greater than the alternative torque, the alternative torque can be taken as the initial flywheel end torque to ensure that the engine 11 can provide a flywheel end torque that corresponds to the second maximum intake air volume.
3) Correcting the initial maximum flywheel end torque based on a current altitude of the vehicle 100 to obtain the maximum air path torque.

It can be understood that, given the same intake air volume of the engine 11, air masses can vary at different altitudes (for instance, the oxygen content differs at varying altitudes). When air of different masses is mixed with the same amount of fuel, the resulting thermal energy will differ, and consequently, the flywheel end torque of engine 11 will also vary. Therefore, it is necessary to correct the flywheel end torque based on the current altitude of vehicle 100. Specifically, through preliminary test, correction coefficients corresponding to different altitudes can be established. Then, based on the correction coefficient corresponding to the current altitude of vehicle 100, the initial flywheel end torque can be corrected to obtain the maximum air path torque. In this way, flywheel end torque variations caused by different air masses at varying altitudes can be avoided, thereby enhancing the accuracy of the maximum air path torque.

After obtaining the maximum air path torque, it can be sent to the PCU 191, enabling the PCU 191 to take this maximum air path torque as the maximum air path torque that the engine 11 can provide at the current rotational speed.

To summarize, in the technical solutions of some examples of the present application, after obtaining the first maximum intake air volume allowed by the engine 11 at the current rotational speed and subsequently correcting the first maximum intake air volume according to the correction coefficient corresponding to the current temperature of the temperature influence factor, the influence of temperature changes in the temperature influence factor on the engine's intake air volume can be overcame, so that the second maximum intake air volume more closely approximates to an actual intake air volume of the engine 11. Consequently, the maximum air path torque calculated based on the second maximum intake air volume will be more accurate, enabling more accurate control of the vehicle 100 according to the maximum air path torque.

Further explanations of the present application's solution are provided below.

In some examples, there are multiple different control modes for opening and closing the intake valve 112. When the engine 11 operates at the same rotational speed, opening durations of the intake valve 112 may not be entirely the same under different control modes. For instance, it is assumed that the engine 11 has a rotational speed of 10 rps. Under Control Mode 1, the opening duration of the intake valve 112 may be 10 seconds; however, under Control Mode 2, the opening duration of the intake valve 112 may be 5 seconds. It can be understood that, since the opening durations vary under different control modes, the maximum intake air volume of the engine 11 will also inevitably differ under these different control modes. In view of this, it is necessary to distinguish the first maximum intake air volume entering the engine 11 according to the control modes of the intake valve 112.

Specifically, for each control mode, a corresponding relationship between the rotational speed range and the first maximum intake air volume, as shown in Table 1, can be established. Based on this, the step of determining a first maximum intake air volume allowed by the engine at the current rotational speed in Step S41 may comprise:
obtaining a current target control mode for the intake valve 112; and
searching, among multiple maximum air volumes corresponding to the target control mode, for a target maximum air volume allowed by the engine 11 at the current rotational speed, and taking the target maximum air volume as the first maximum intake air volume.

In this way, the issue of inconsistent opening durations of the intake valve 112 under different control modes can be addressed, leading to a more accurate determination of the first maximum intake air volume.

Optionally, the control modes for the intake valve comprise a first control mode based on the intake control system 113. The step of obtaining a current target control mode for the intake valve may comprise:
taking the first control mode as the target control mode when the intake control system 113 is in an operating state; and
taking a second control mode other than the first control mode as the target control mode when the intake control system 113 is not in an operating state.

Here, the control principle underlying the second control mode can differ from that of the intake control system 113. For instance, the intake control system 113 can adjust the opening and closing times of the intake valve 112 based on variations in the rotational speed and load of the engine 11. In contrast, under the second control mode, the opening duration of the intake valve 112 is controlled according to a fixed preset duration.

Since the intake control system 113 can adjust the opening and closing times of the intake valve 112 based on variations in the rotational speed and load of the engine 11, when the intake control system 113 is in an operating state, prioritizing the first control mode based on the intake control system 113 as the target control mode can enhance the operational efficiency of the engine 11. Conversely, when the intake control system 113 is not in an operating state, taking the second control mode as the target control mode ensures the normal operation of the engine 11 and prevents malfunctions of the engine 11.

Optionally, the present application also provides a method for establishing a correspondence relationship between various temperature ranges of the temperature influence factor and the correction coefficient. Specifically, in some examples, before the step of searching for a correction coefficient corresponding to the current temperature, the control method according to the present application may further comprise:
performing following operations separately in different temperature ranges of the temperature influence factor to determine the correction coefficient corresponding to each temperature range:
sending a torque command to the engine 11 to instruct the engine 11 to provide a first air path torque represented by the torque command;
obtaining a second air path torque actually provided by the engine 11 after the engine 11 responds to the torque command;
if the first air path torque is different from the second air path torque, determining an actual intake air volume of the engine 11 when the engine 11 provides the second air path torque; and
determining the correction coefficient based on the actual intake air volume and the first maximum intake air volume allowed by the engine 11.

Here, the first air path torque and the second air path torque are the flywheel end torques provided by the engine 11. It can be understood that when the first air path torque and the second air path torque are the same, it indicates that the engine 11 is capable of providing the first air path torque represented by the torque command. In this case, it cannot be determined whether the flywheel end torque provided by the engine 11 is the maximum flywheel end torque that the engine 11 can provide within its performance limits. However, when the first air path torque and the second air path torque are not the same, for instance, if the first air path torque is 500 N·m and the second air path torque is 400 N·m, it can be concluded that the engine 11 is no longer able to provide the first air path torque represented by the torque command. That is to say, the second air path torque currently provided by the engine 11 is the maximum flywheel end torque that the engine can provide within its performance limits.

Optionally, since the air path torque of the engine 11 is related to its intake air volume, the actual intake air volume of the engine 11 can be derived based on the second air path torque. And the correction coefficient can be determined based on the actual intake air volume and the first maximum intake air volume allowed by the engine 11.

Specifically, in the above example, the engine 11 can be fixed to operate at one of target rotational speeds. Subsequently, the operations described above can be performed to determine the actual intake air volume of the engine 11 at different temperature ranges. Then, by dividing the actual intake air volume at each temperature range by a target first maximum intake air volume allowed by the engine 11 at the target rotational speed, a correspondence relationship between the temperature range and the correction coefficient, as shown in Table 2, can be established. In this way, the process of determining the correction coefficient is highly operable.

Optionally, considering that the maximum flywheel end torque that the engine 11 can provide varies in different rotational speed ranges, in some examples, the step of sending torque commands to the engine 11 may comprise:
sending torque commands to the engine 11 separately in different rotational speed ranges of the engine 11, wherein the torque commands corresponding to the different rotational speed ranges are not entirely the same.

In simple terms, the correction coefficient is determined based on two dimensions: the rotational speed ranges of the engine 11 and the temperature ranges of the temperature influence factor. That is, in these examples, when determining the correction coefficient, the engine 11 is operated in different rotational speed ranges. Within each rotational speed range, the process of determining the correction coefficient, as described above, is performed separately. For example:
In the rotational speed range [0,10], the process of determining the correction coefficient is performed for different temperature ranges of the temperature influence factor to obtain the correction coefficient corresponding to each temperature range; and

Similarly, in the rotational speed range [10,20], the process of determining the correction coefficient is performed for different temperature ranges of the temperature influence factor to obtain the correction coefficient corresponding to each temperature range.

By following this sequentially, a correspondence relationship among the rotational speed range, the temperature range, and the correction coefficient-as shown in Table 3 or Table 4-can be obtained.

In this way, it is possible to adapt to the situation where the engine 11 provides different torques in different rotational speed ranges.

Optionally, considering that the load of the engine 11 also has a certain impact on the flywheel end torque, that is, the flywheel end torque that the engine 11 can provide varies under different loads, in some examples, the step of sending torque commands to the engine 11 may comprise:
sending torque commands to the engine 11 separately in different load ranges of the engine 11, wherein the torque commands corresponding to the different load ranges are not entirely the same.

In this way, a correspondence relationship among the load range, the temperature range, and the correction coefficient can be obtained, which is similar to that among the rotational speed range, the temperature range, and the correction coefficient, and thus will not be elaborated on here.

In this way, it is possible to adapt to the situation where the engine 11 provides different torques in different load ranges.

In some examples, the correction coefficient can also be determined based on three dimensions: the rotational speed range, the load range, and the temperature range, thereby establishing a correspondence relationship among the rotational speed range, the load range, the temperature range, and the correction coefficient.

Optionally, in some examples, the step of obtaining a second air path torque actually provided by the engine 11 after the engine 11 responds to the torque command may comprise:
obtaining a motor power and a motor rotational speed of the generator 12, and determining a motor torque provided by the generator 12 based on the motor power and the motor rotational speed; and
converting from the motor torque to obtain the second air path torque.

Specifically, those skilled in the art should know that there is a formulaic relationship among the motor power, the motor rotational speed, and the motor torque. Therefore, by inputting the motor power and the motor rotational speed into the corresponding formula, the motor torque can be obtained.

Optionally, as can be inferred from the relevant description of FIG.1, when the generator 12 operates under steady-state conditions, the motor torque of the generator 12 is the same as the flywheel end torque of the engine 11. Therefore, when obtaining the second air path torque, the generator 12 can be directly operated under steady-state conditions. In this way, the calculated motor torque can be taken as the second air path torque. By indirectly obtaining the second air path torque through motor torque detection, the detection solution can be simplified.

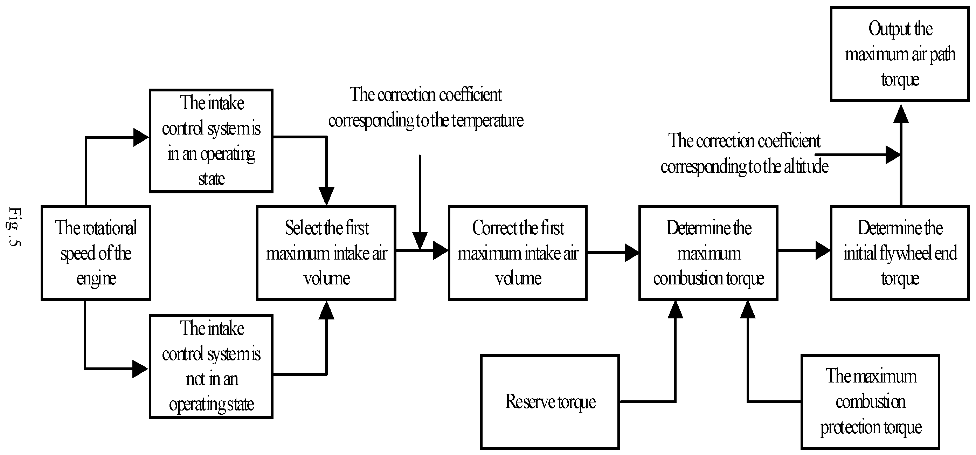

For ease of understanding, with reference to FIG.5, it is a flowchart of determining a maximum air path torque according to an example of the present application. FIG.5 specifically comprises the following steps:
1) Obtain the rotational speed of the engine;
2) Select the first maximum intake air volume based on the operating state of the intake control system; Specifically, if the intake control system is in an operating state, among the multiple maximum air volumes corresponding to the first control mode (i.e., the control mode based on the intake control system), the target maximum air volume corresponding to the rotational speed of the engine is selected as the first maximum intake air volume; and
   If the intake control system is not in an operating state, among the multiple maximum air volumes corresponding to the second control mode, the target maximum air volume corresponding to the rotational speed of the engine is taken as the first maximum intake air volume;
3) Correct the first maximum intake air volume according to the correction coefficient corresponding to the current temperature of the temperature influence factor;
4) Convert the corrected first maximum intake air volume into the maximum combustion torque of the engine 11;
5) Obtain the initial flywheel end torque of the engine 11 based on the maximum combustion torque, the reserve torque of the engine 11, and the maximum combustion protection torque;
   Specifically, an alternative torque can be obtained by deducting the reserve torque of the engine 11 from the maximum combustion torque. The obtained alternative torque is then compared with the maximum combustion protection torque of the engine 11, and the lesser of the two values is selected as the initial flywheel end torque; and
6) Correct the initial maximum flywheel end torque based on the current altitude of the vehicle 100 to obtain the maximum air path torque.

At this point, the full description of the control method of the present application has been completed.

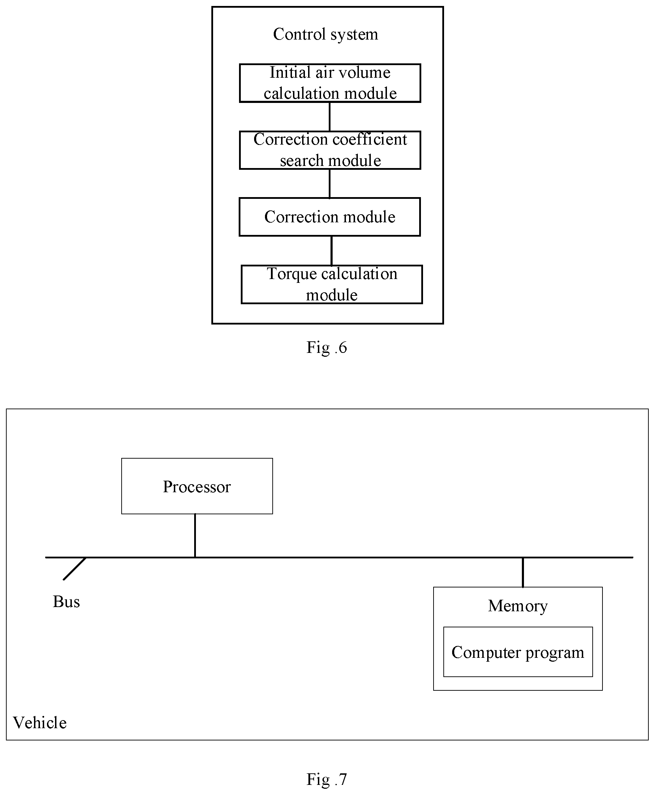

Corresponding to the control method, the present application further provides a control system for the vehicle 100. With reference to FIG.6, it is a schematic diagram of modules of a control system according to an example of the present application. In FIG.6, the control system comprises:
an initial air volume calculation module, configured to obtain a current rotational speed of an engine and determine a first maximum intake air volume allowed by the engine at the current rotational speed;
a correction coefficient search module, configured to obtain a current temperature of a temperature influence factor and search for a correction coefficient corresponding to the current temperature, wherein the temperature influence factor represents a factor with changing temperature, and a temperature magnitude of the temperature influence factor is correlated with a magnitude of an intake air volume of the engine;
a correction module, configured to correct the first maximum intake air volume according to the correction coefficient to obtain a second maximum intake air volume; and
a torque calculation module, configured to calculate, based on the second maximum intake air volume, a maximum air path torque that the engine can provide, and control the vehicle according to the maximum air path torque.

In some examples, the engine further comprises an intake valve, and there are multiple different control modes for opening and closing the intake valve; and the initial air volume calculation module is specifically configured to:
obtain a current target control mode for the intake valve; and
search, among multiple maximum air volumes corresponding to the target control mode, for a target maximum air volume allowed by the engine at the current rotational speed, and take the target maximum air volume as the first maximum intake air volume.

In some examples, the vehicle further comprises an intake control system for controlling the opening and closing of the intake valve, and the control modes for the intake valve comprise a first control mode based on the intake control system; and the initial air volume calculation module is specifically configured to:
take the first control mode as the target control mode when the intake control system is in an operating state; and
take a second control mode other than the first control mode as the target control mode when the intake control system is not in an operating state.

In some examples, the torque calculation module is specifically configured to:
convert the second maximum intake air volume into a maximum combustion torque of the engine;
convert from the maximum combustion torque to obtain a maximum flywheel end torque of the engine; and
correct the maximum flywheel end torque based on a current altitude of the vehicle to obtain the maximum air path torque.
In some examples, the control system further comprises a correction coefficient determination module; and
before the step of searching for a correction coefficient corresponding to the current temperature, the correction coefficient determination module is configured to:
   perform following operations separately in different temperature ranges of the temperature influence factor to determine the correction coefficient corresponding to each temperature range:
   send a torque command to the engine to instruct the engine to provide a first air path torque represented by the torque command;
   obtain a second air path torque actually provided by the engine after the engine responds to the torque command;
   if the first air path torque is different from the second air path torque, determine an actual intake air volume of the engine when the engine provides the second air path torque; and
   determine the correction coefficient based on the actual intake air volume and the first maximum intake air volume allowed by the engine.
   In some examples, the vehicle further comprises a generator connected in series with the engine; and
   the correction coefficient determination module is specifically configured to:
      obtain a motor power and a motor rotational speed of the generator, and determine a motor torque provided by the generator based on the motor power and the motor rotational speed; and
      convert from the motor torque to obtain the second air path torque.

In some examples, the correction coefficient determination module is specifically configured to:
send torque commands to the engine separately in different rotational speed ranges of the engine, wherein the torque commands corresponding to the different rotational speed ranges are not entirely the same.

In some examples, the correction coefficient determination module is specifically configured to:
send torque commands to the engine separately in different load ranges of the engine, wherein the torque commands corresponding to the different load ranges are not entirely the same.

With reference to FIG.7, it is a schematic diagram of a vehicle according to an example of the present application. The vehicle comprises a processor and a memory, and the memory is configured to store a computer program which implements the aforementioned method when executed by the processor.

Here, the processor can be a Central Processing Unit (CPU). The processor can also be other general-purpose processors, Digital Signal Processors (DSPs), Application Specific Integrated Circuits (ASICs), Field-Programmable Gate Arrays (FPGAs), or other programmable logic devices, discrete gate or transistor logic devices, discrete hardware components, or combinations of these chips.

The memory, as a non-transitory computer-readable storage medium, can be used to store non-transitory software programs and non-transitory computer-executable programs and modules, such as the program instructions/modules corresponding to the method in the embodiments of the present application. By running the non-transitory software programs, instructions, and modules stored in the memory, the processor executes various functional applications and data processing tasks of the processor, thereby implementing the method described in the aforementioned embodiments.

The memory may comprise a program storage area and a data storage area. The program storage area can store an operating system and application programs required for at least one function. The data storage area can store data created by the processor, among other things. Additionally, the memory can include high-speed random access memory and may also include non-transitory memory, such as at least one magnetic disk storage device, flash memory device, or other non-transitory solid-state storage devices. In some embodiments, the memory may optionally include memory located remotely from the processor, where such remote memory can be connected to the processor via a network. Examples of such networks include, but are not limited to, the Internet, intranets, local area networks, mobile communication networks, and combinations thereof.

An embodiment of the present application further provides a computer-readable storage medium configured to store a computer program which implements the aforementioned method when executed by a processor.

Although the embodiments of the present application have been described in conjunction with the accompanying drawings, those skilled in the art can make various modifications and variations without departing from the spirit and scope of the present application, and such modifications and variations fall within the scope defined by the appended claims.

## Claims

1. A control method for a vehicle, wherein the vehicle comprises an engine; and the control method comprises:
obtaining a current rotational speed of the engine, and determining a first maximum intake air volume allowed by the engine at the current rotational speed;
obtaining a current temperature of a temperature influence factor, and searching for a correction coefficient corresponding to the current temperature, wherein the temperature influence factor represents a factor with changing temperature, and a temperature magnitude of the temperature influence factor is correlated with a magnitude of an intake air volume of the engine;
correcting the first maximum intake air volume according to the correction coefficient to obtain a second maximum intake air volume; and
calculating, based on the second maximum intake air volume, a maximum air path torque that the engine can provide, and controlling the vehicle according to the maximum air path torque.

2. The control method according to claim 1, wherein the engine further comprises an intake valve, and there are multiple different control modes for opening and closing the intake valve; and
the step of determining a first maximum intake air volume allowed by the engine at the current rotational speed comprises:
obtaining a current target control mode for the intake valve; and
searching, among multiple maximum air volumes corresponding to the target control mode, for a target maximum air volume allowed by the engine at the current rotational speed, and taking the target maximum air volume as the first maximum intake air volume.

3. The control method according to claim 2, wherein the engine further comprises an intake control system for controlling the opening and closing of the intake valve, and the control modes for the intake valve comprise a first control mode based on the intake control system; and
the step of obtaining a current target control mode for the intake valve comprises:
taking the first control mode as the target control mode when the intake control system is in an operating state; and
taking a second control mode other than the first control mode as the target control mode when the intake control system is not in an operating state.

4. The control method according to claim 1, wherein the step of calculating, based on the second maximum intake air volume, a maximum air path torque that the engine can provide comprises:
converting the second maximum intake air volume into a maximum combustion torque of the engine;
converting from the maximum combustion torque to obtain an initial maximum flywheel end torque of the engine; and
correcting the initial maximum flywheel end torque based on a current altitude of the vehicle to obtain the maximum air path torque.

5. The control method according to any one of claims 1 to 4, wherein, before the step of searching for a correction coefficient corresponding to the current temperature, following operations are performed separately in different temperature ranges of the temperature influence factor to determine the correction coefficient corresponding to each temperature range:
sending a torque command to the engine to instruct the engine to provide a first air path torque represented by the torque command;
obtaining a second air path torque actually provided by the engine after the engine responds to the torque command;
if the first air path torque is different from the second air path torque, determining an actual intake air volume of the engine when the engine provides the second air path torque; and
determining the correction coefficient based on the actual intake air volume and the first maximum intake air volume allowed by the engine.

6. The control method according to claim 5, wherein the vehicle further comprises a generator connected in series with the engine; and
the step of obtaining a second air path torque actually provided by the engine after the engine responds to the torque command comprises:
obtaining a motor power and a motor rotational speed of the generator, and determining a motor torque provided by the generator based on the motor power and the motor rotational speed; and
converting from the motor torque to obtain the second air path torque.

7. The control method according to claim 5, wherein the step of sending a torque command to the engine comprises:
sending torque commands to the engine separately in different rotational speed ranges of the engine, wherein the torque commands corresponding to the different rotational speed ranges are not entirely the same.

8. The control method according to claim 5, wherein the step of sending a torque command to the engine comprises:
sending torque commands to the engine separately in different load ranges of the engine, wherein the torque commands corresponding to the different load ranges are not entirely the same.

9. A control system for a vehicle, wherein the vehicle comprises an engine; and the control system comprises:
an initial air volume calculation module, configured to obtain a current rotational speed of the engine and determine a first maximum intake air volume allowed by the engine at the current rotational speed;
a correction coefficient search module, configured to obtain a current temperature of a temperature influence factor and search for a correction coefficient corresponding to the current temperature, wherein the temperature influence factor represents a factor with changing temperature, and a temperature magnitude of the temperature influence factor is correlated with a magnitude of an intake air volume of the engine;
a correction module, configured to correct the first maximum intake air volume according to the correction coefficient to obtain a second maximum intake air volume; and
a torque calculation module, configured to calculate, based on the second maximum intake air volume, a maximum air path torque that the engine can provide, and control the vehicle according to the maximum air path torque.

10. The control system according to claim 9, wherein the engine further comprises an intake valve, and there are multiple different control modes for opening and closing the intake valve; and the initial air volume calculation module is specifically configured to:
obtain a current target control mode for the intake valve; and
search, among multiple maximum air volumes corresponding to the target control mode, for a target maximum air volume allowed by the engine at the current rotational speed, and take the target maximum air volume as the first maximum intake air volume.

11. The control system according to claim 10, wherein the vehicle further comprises an intake control system for controlling the opening and closing of the intake valve, and the control modes for the intake valve comprise a first control mode based on the intake control system; and the initial air volume calculation module is specifically configured to:
take the first control mode as the target control mode when the intake control system is in an operating state; and
take a second control mode other than the first control mode as the target control mode when the intake control system is not in an operating state.

12. The control system according to claim 9, wherein the torque calculation module is specifically configured to:
convert the second maximum intake air volume into a maximum combustion torque of the engine;
convert from the maximum combustion torque to obtain a maximum flywheel end torque of the engine; and
correct the maximum flywheel end torque based on a current altitude of the vehicle to obtain the maximum air path torque.

13. The control system according to any one of claims 10 to 12, wherein the control system further comprises a correction coefficient determination module; and
before the step of searching for a correction coefficient corresponding to the current temperature, the correction coefficient determination module is configured to:
perform following operations separately in different temperature ranges of the temperature influence factor to determine the correction coefficient corresponding to each temperature range:
send a torque command to the engine to instruct the engine to provide a first air path torque represented by the torque command;
obtain a second air path torque actually provided by the engine after the engine responds to the torque command;
if the first air path torque is different from the second air path torque, determine an actual intake air volume of the engine when the engine provides the second air path torque; and
determine the correction coefficient based on the actual intake air volume and the first maximum intake air volume allowed by the engine.

14. The control system according to claim 13, wherein the vehicle further comprises a generator connected in series with the engine; and
the correction coefficient determination module is specifically configured to:
obtain a motor power and a motor rotational speed of the generator, and determine a motor torque provided by the generator based on the motor power and the motor rotational speed; and
convert from the motor torque to obtain the second air path torque.

15. The control system according to claim 13, wherein the correction coefficient determination module is specifically configured to:
send torque commands to the engine separately in different rotational speed ranges of the engine, wherein the torque commands corresponding to the different rotational speed ranges are not entirely the same.

16. The control system according to claim 13, wherein the correction coefficient determination module is specifically configured to:
send torque commands to the engine separately in different load ranges of the engine, wherein the torque commands corresponding to the different load ranges are not entirely the same.

17. A computer-readable storage medium, wherein the computer-readable storage medium is configured to store a computer program which implements the method according to any one of claims 1 to 8 when executed by a processor.

18. A vehicle, comprising a processor and a memory, wherein the memory is configured to store a computer program which implements the method according to any one of claims 1 to 8 when executed by the processor.
